# EUROPÄISCHE PATENTSCHRIFT

(11) **EP 4 021 701 B1**
(45) Veröffentlichungstag und Bekanntmachung des Hinweises auf die Patenterteilung: **28.01.2026**
(21) Anmeldenummer: 20730262.1
(22) Anmeldetag: 03.06.2020
(51) Int. Cl.: B29B 11/16, B29C 70/50

(54) **VORRICHTUNG UND VERFAHREN ZUR HERSTELLUNG VON VORFORMLINGEN**
DEVICE AND METHOD FOR PRODUCING PREFORMS
DISPOSITIF ET PROCÉDÉ POUR LA FABRICATION DE PRÉFORMES

(30) Priorität: 30.08.2019 DE 102019123384
(43) Veröffentlichungstag der Anmeldung: 06.07.2022
(73) Patentinhaber: Broetje-Automation GmbH, 26180 Rastede (DE)
(72) Erfinder: BERG, Erik, 26127 Oldenburg (DE)
(74) Vertreter: Gottschald Patentanwälte Partnerschaft mbB
(86) Internationale Anmeldenummer: PCT/EP2020/065311
(87) Internationale Veröffentlichungsnummer: WO 2021/037405

(56) Entgegenhaltungen:
- DE-A1- 10 309 806
- DE-U1- 202013 006 605
- KR-B1- 101 932 635

## Beschreibung

Die Erfindung betrifft eine Vorrichtung zur Herstellung von Vorformlingen für Flugzeugstrukturbauteile gemäß dem Oberbegriff von Anspruch 1, ein Verfahren zur Herstellung von Vorformlingen für Flugzeugstrukturbauteile gemäß dem Oberbegriff von Anspruch 11 sowie einen Vorformling gemäß Anspruch 15 als solchen.

Die Verwendung von faserverstärkten Werkstoffen, sogenannten Faserverbundwerkstoffen, nimmt heutzutage stark zu. Dies gilt insbesondere für glasfaserverstärkte sowie kohlefaserverstärkte Bauteile (GFK- bzw. CFK-Bauteile), deren Verwendung aufgrund der stetig steigenden Nachfrage nach Leichtbaulösungen immer weiter zunimmt. Dies gilt in besonderem Maße für die Luft- und Raumfahrtindustrie sowie für die Automobilindustrie,

DE 103 09 806 A1 offenbart die Merkmale der Oberbegriffe der Ansprüche 1 und 11.

Aus dem Stand der Technik (DE 603 11 453 T2) ist eine Vorrichtung zur Herstellung von Vorformlingen für Flugzeugstrukturbauteile bekannt, bei der eine Bereitstellungseinheit mit mehreren Rollen bestückt wird, die aufgespult jeweils eine Materiallage eines thermisch aktivierbaren, flexiblen Faserverbundwerkstoffs aufweisen. Bei dem Faserverbundwerkstoff handelt es sich um ein mit einem Reaktionsharz imprägniertes Fasermaterial, beispielsweise ein Glasfasermaterial oder Kohlefasermaterial, das auch als Prepreg bezeichnet wird. Die jeweilige Materiallage ist bei diesem Stand der Technik beidseitig mit einer Schutzfolie versehen, die ein Verkleben radial benachbarter Abschnitte der aufgespulten Materiallage verhindern soll. Die Rollen werden in der Bereitstellungseinheit abgespult, wobei die Schutzfolien auf den beiden Seiten der jeweiligen Materiallage noch in der Bereitstellungseinheit abgezogen werden. Die so von den Schutzfolien befreite Materiallage wird dann einer Umformeinheit zugeführt, in der die jeweilige Materiallage, hier zusammen mit weiteren Materiallagen, umgeformt wird. Nach dem Umformen werden die Materiallagen dann erwärmt, gepresst und nachgehärtet.

Damit beim Erwärmen und Pressen, was in einer Heißpressvorrichtung durchgeführt wird, sich verflüssigendes Reaktionsharz nicht an den Pressformen anhaften kann, wird bei diesem Stand der Technik zwischen dem zu verpressenden Material und der jeweiligen Pressform eine separate Schutzfolie angeordnet. Dazu sind zwei separate Schutzfolienzuführeinheiten vorgesehen, von denen eine eine untere Schutzfolie vor dem Eintritt der Materiallagen in die Umformeinheit und eine andere eine obere Schutzfolie nach dem Ausstritt der umgeformten Materiallagen aus der Umformeinheit zuführt. Die untere und obere Schutzfolie wird dann nach dem Erwärmen und Aushärten jeweils wieder abgezogen. Das Bereitstellen, Handhaben und Entsorgen all der genannten Schutzfolien führt zu einem erhöhten Herstellungsaufwand bei der Herstellung von Vorformlingen.

Der Erfindung liegt das Problem zugrunde, die bekannte Vorrichtung derart auszugestalten und weiterzubilden, dass die Herstellung von Vorformlingen vereinfacht wird.

Das obige Problem wird durch die Merkmale des kennzeichnenden Teils von Anspruch 1 gelöst.

Wesentlich ist die grundsätzliche Überlegung, eine bei Anlieferung der jeweiligen Materiallage ohnehin schon mit dieser verbundene Schutzfolie, die die jeweilige Materiallage bis zu deren Verwendung in der vorschlagsgemäßen Vorrichtung und insbesondere beim Aufspulen zu einer Rolle schützt, auch in nachfolgenden Prozessschritten bei der Herstellung von Vorformlingen zu nutzen. In den weiteren Prozessschritten, in denen ein Schichtaufbau mit mindestens einer solchen Materiallage umgeformt und insbesondere erwärmt wird, kann auf diese Weise ein Anhaften von Reaktionsharz an Anlagenteilen einfach verhindert werden. Insbesondere ist es dazu nicht erforderlich, separate Schutzfolien vorzusehen, die über jeweils eine eigene Schutzfolienzuführeinheit zugeführt und die zusätzlich entsorgt werden müssen.

Im Einzelnen wird vorgeschlagen, dass der Schichtaufbau zusammen mit der jeweiligen Schutzfolie der Umformeinheit oder einer der Umformeinheiten mit einem Querschnittsprofil, mit dem sich die Schutzfolie oder mindestens eine der Schutzfolien entlang einer Geraden erstreckt, zuführbar ist. In dem Fall, dass die Vorrichtung mehrere Umformeinheiten aufweist, handelt es sich bei der jeweiligen Umformeinheit insbesondere um die in Förderrichtung erste und gegebenenfalls einzige Querumformeinheit, die vorzugsweise auch insgesamt die in Förderrichtung erste Umformeinheit ist. Der Schichtaufbau und somit die jeweilige Schutzfolie ist also zu dem Zeitpunkt unmittelbar vor dem Umformen jedenfalls in Querrichtung noch nicht vorgeformt, sondern gerade.

Besonders bevorzugt erstreckt sich der Schichtaufbau und somit die jeweilige Schutzfolie unmittelbar vor dem Umformen nicht nur im Querschnitt entlang einer Geraden, sondern erstreckt sich entlang einer Ebene (Anspruch 2). Der Schichtaufbau und somit die jeweilige Schutzfolie ist also auch in Förderrichtung zu diesem Zeitpunkt noch nicht vorgeformt, sondern wird als ebenes Band der jeweiligen Umformeinheit zugeführt. Mit der "jeweiligen Umformeinheit" ist immer diejenige Umformeinheit gemeint, der der Schichtaufbau zusammen mit der jeweiligen Schutzfolie mit dem Querschnittsprofil, mit dem sich die Schutzfolie oder mindestens eine der Schutzfolien entlang einer Geraden erstreckt, zuführbar ist.

Nach der bevorzugten Ausgestaltung gemäß Anspruch 3 ist eine Zuführeinheit vorgesehen, mittels der der Schichtaufbau transportiert wird und somit durch die jeweilige Umformeinheit oder alle Umformeinheiten und gegebenenfalls weitere Verarbeitungseinheiten der Vorrichtung hindurchführbar ist. Die Zuführeinheit, die insbesondere mit einem Förderantrieb und/oder einem ein- oder mehrteiligen Förderelement umfassend eine oder mehrere Transportrollen, Transportbänder oder dergleichen ausgestattet ist, ist dabei so eingerichtet, dass sich während des Transports die jeweilige Schutzfolie im Querschnitt entlang der besagten Geraden und insbesondere entlang der besagten Ebene erstreckt (Anspruch 4).

Anspruch 5 betrifft eine Heizeinheit, mittels der der Schichtaufbau vor dem Erreichen der jeweiligen Umformeinheit erwärmt werden kann. Auf diese Weise kann ein Reaktionsharz des Faserverbundwerkstoffs aktiviert werden, also zum Zwecke einer optimalen Umformbarkeit verflüssigt werden. In der jeweiligen Umformeinheit und gegebenenfalls einer oder mehreren weiteren Umformeinheiten kann der Schichtaufbau dann bereits abkühlen und auszuhärten beginnen.

Nach der besonders bevorzugten Ausgestaltung gemäß Anspruch 6 kann durch die Bereitstellungseinheit auch ein mehrlagiger Schichtaufbau mit mindestens zwei oder mehr Materiallagen eines thermisch aktivierbaren, flexiblen Faserverbundwerkstoffs bereitgestellt werden. Dabei sind im Inneren des Schichtaufbaus vorzugsweise keine Schutzfolien vorhanden, so dass sich die Materiallagen unmittelbar berühren. Dabei kann vorgesehen sein, dass in der Bereitstellungseinheit mehrere Materiallagen, beispielsweise zwei Materiallagen, zusammengeführt werden, wobei dann an der bzw. den Materiallagenseiten, die beim Zusammenführen mit einer benachbarten Materiallage in Kontakt kommen, eine zuvor eventuell vorhandene Schutzfolie vor dem Zusammenführen der Materiallagen abgezogen wird oder auf der jeweiligen Materiallagenseite von vorneherein auf eine solche Schutzfolie verzichtet wird. Jedenfalls weist ein solcher mehrlagiger Schichtaufbau zumindest auf einer seiner Außenseiten, vorzugsweise auf beiden Außenseiten, je eine in Rede stehende Schutzfolie auf, ist aber in seinem Inneren vorzugsweise frei von Schutzfolien.

Anspruch 7 betrifft eine Trenneinheit, die der jeweiligen Umformeinheit nachgelagert ist und die den umgeformten Schichtaufbau quer zur Förderrichtung durchtrennt, um dadurch Vorformlinge mit einer vorgegebenen Länge zu bilden. Anspruch 8 betrifft eine Nachhärteeinheit, die der jeweiligen Umformeinheit und insbesondere auch der Trenneinheit nachgelagert ist und den Schichtaufbau zum Nachhärten erneut erwärmt. Eine solche Nachhärteeinheit ist insbesondere ein Autoklav.

Erfindungsgemäß ist eine Abzieheinheit vorgesehen, die zum Abziehen der Schutzfolie oder Schutzfolien dient, die sich bis zum Erreichen der jeweiligen Umformeinheit noch entlang der jeweiligen Gerade erstreckt hat bzw. haben. Die Abzieheinheit ist der jeweiligen Umformeinheit in Förderrichtung nachgelagert. Besonders bevorzugte Abschnitte der Vorrichtung, an denen die Abzieheinheit die jeweilige Schutzfolie von Schichtaufbau abziehen kann, sind in Anspruch 10 definiert.

Nach einer weiteren Lehre gemäß Anspruch 11, der eigenständige Bedeutung zukommt, wird ein Verfahren zur Herstellung von Vorformlingen für Flugzeugstrukturbauteile, insbesondere zur Anwendung in einer vorschlagsgemäßen Vorrichtung, beansprucht, bei dem in einer Bereitstellungseinheit ein Schichtaufbau mit mindestens einer Materiallage eines thermisch aktivierbaren, flexiblen Faserverbundwerkstoffs zusammen mit einer an mindestens einer Außenseite des Schichtaufbaus jeweils angeordneten Schutzfolie insbesondere kontinuierlich bereitgestellt wird und bei dem in mindestens einer der Bereitstellungseinheit in einer Förderrichtung nachgelagerten Umformeinheit der bereitgestellte Schichtaufbau umgeformt wird. Vorschlagsgemäß wird der Schichtaufbau zusammen mit der jeweiligen Schutzfolie der Umformeinheit oder einer der Umformeinheiten mit einem Querschnittsprofil, mit dem sich die Schutzfolie oder mindestens eine der Schutzfolien entlang einer Geraden erstreckt, zugeführt. Auf alle Ausführungen zu der vorschlagsgemäßen Vorrichtung darf verwiesen werden.

Besonders bevorzugte Ausgestaltungen des Faserverbundwerkstoffs, der bei dem vorschlagsgemäßen Verfahren verwendet werden kann, sind in Anspruch 12 definiert.

Besonders bevorzugte Ausgestaltungen der Schutzfolie oder Schutzfolien, die bei dem vorschlagsgemäßen Verfahren verwendet werden können, sind in Anspruch 13 definiert.

Nach der bevorzugten Ausgestaltung gemäß Anspruch 14 ist der Schichtaufbau bis zum Erreichen der jeweiligen Umformeinheit auf einer oder beiden Außenseiten mit einer besagten Schutzfolie versehen.

Nach einer weiteren Lehre gemäß Anspruch 15, der ebenfalls eigenständige Bedeutung zukommt, wird ein Vorformling beansprucht, der unter Verwendung einer vorschlagsgemäßen Vorrichtung und/oder durch ein vorschlagsgemäßes Verfahren hergestellt ist. Auf alle Ausführungen zu der vorschlagsgemäßen Vorrichtung und zu dem vorschlagsgemäßen Verfahren darf verwiesen werden.

Im Folgenden wird die Erfindung anhand einer lediglich ein Ausführungsbeispiel darstellenden Zeichnung näher erläutert. In der Zeichnung zeigt
- Fig. 1: in a) schematisch eine dreidimensionale Darstellung eines Flugzeugs mit einem Flugzeugstrukturbauteil, hergestellt unter Verwendung eines vorschlagsgemäßen Vorformlings, und in b) schematisch eine dreidimensionale Darstellung einer Materiallage im aufgespulten Zustand zur Bestückung einer Bereitstellungseinheit einer vorschlagsgemäßen Vorrichtung und
- Fig. 2: eine schematische Darstellung der vorschlagsgemäßen Vorrichtung und des vorschlagsgemäßen Verfahrens zur Herstellung vorschlagsgemäßer Vorformlinge.

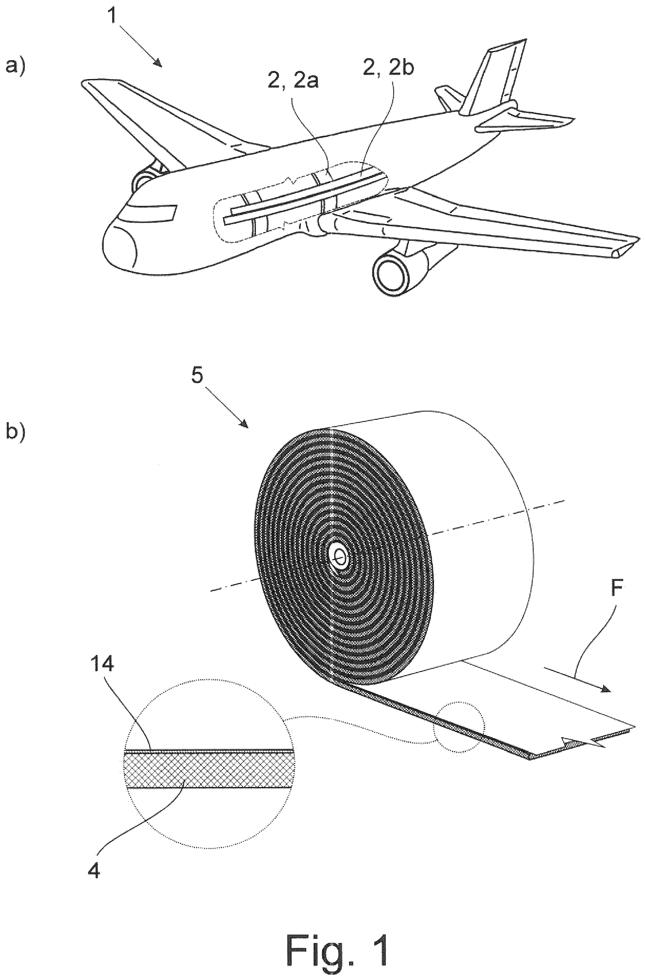

In Fig. 1a) ist ein Flugzeug 1 mit Flugzeugstrukturbauteilen 2 dargestellt. In dem Ausbruch der Fig. 1a) sind beispielhaft Spanten 2a und Stringer 2b als solche Flugzeugstrukturbauteile 2 gezeigt.

Heute werden diese Flugzeugstrukturbauteile 2 auch als faserverstärkte Bauteile hergestellt. Hierzu werden sogenannte Vorformlinge 3 hergestellt, die anschließend, insbesondere durch Zusammenfügen mit anderen Vorformlingen 3, zu den Flugzeugstrukturbauteilen 2 weiterverarbeitet werden.

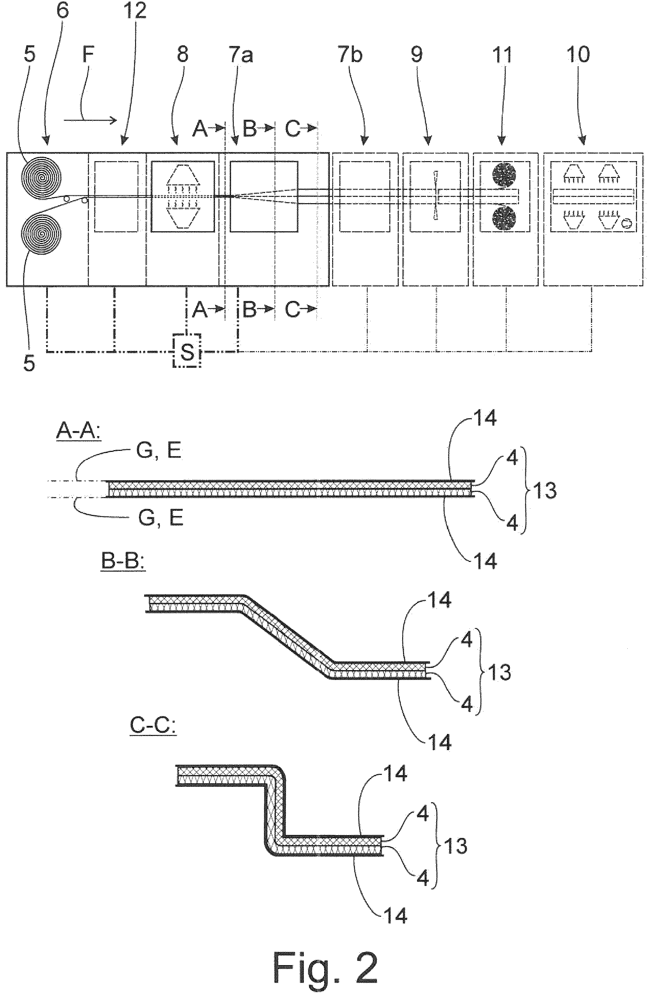

Im Querschnitt ist ein solcher Vorformling 3 in Fig. 2 in dem Schnitt C-C dargestellt. Wie hier zu erkennen ist, weist ein solcher Vorformling 3 mindestens eine Materiallage 4, hier und vorzugsweise zwei Materiallagen 4, eines Faserverbundwerkstoffs auf, der jedenfalls im unverarbeiteten Zustand thermisch aktivierbar und flexibel ausgestaltet ist bzw. sind.

Der Faserverbundwerkstoff der jeweiligen Materiallage 4 weist ein Fasermaterial, insbesondere CFK oder GFK, auf, das mit einem Reaktionsharz imprägniert ist. Das Fasermaterial wiederum weist insbesondere Trockenfasern, Rovings, ein Fasergewebe, ein Fasergelege, ein Faservlies und/oder ein Fasergeflecht auf. Bei dem Reaktionsharz handelt es sich hier und vorzugsweise um ein Harz auf Epoxidharzbasis. Eine solche Materiallage aus einem Fasermaterial und einem Reaktionsharz wird auch als Prepreg bezeichnet. Die einzelnen Materiallagen 4 werden vor ihrer Verarbeitung hier und vorzugsweise aufgespult als Rolle 5 angeliefert.

Die mindestens eine Materiallage 4, hier die beiden Materiallagen 4, werden mit einer Vorrichtung, wie sie schematisch in Fig. 2 oben dargestellt ist, zu besagten Vorformlingen 3 verarbeitet. Durch diese Vorrichtung und das mit dieser angewendete Verfahren können Vorformlinge 3 mit unterschiedlichen Querschnittsprofilen hergestellt werden, hier und vorzugsweise mit einem Z-Profil, wie im Schnitt C-C in Fig. 2 dargestellt ist. Die Begriffe "Querschnitt", "Querschnittsprofil" sowie "Querrichtung" beziehen sich immer auf einen Schnitt quer und insbesondere orthogonal zur Förderrichtung F. Grundsätzlich können Vorformlinge 3 durch eine solche Vorrichtung bzw. durch ein solches Verfahren auch in anderen Profilformen hergestellt werden, beispielsweise als L-, T-, U- oder V-Profil.

Die in Fig. 2 schematisch dargestellte Vorrichtung zur Herstellung von Vorformlingen 3 für Flugzeugstrukturbauteile 2 weist verschiedene Verarbeitungseinheiten auf, darunter zumindest eine Bereitstellungseinheit 6 und mindestens eine Umformeinheit 7a, 7b. Hier und vorzugsweise weist die Vorrichtung als Verarbeitungseinheiten ferner eine Heizeinheit 8 und/oder eine Trenneinheit 9 und/oder eine Nachhärteeinheit 10 und/oder eine Abzieheinheit 11 auf. Es können auch noch verschiedene weitere Verarbeitungseinheiten vorgesehen sein, darunter, wie hier, eine Zuführeinheit 12 zum Transport der Materiallagen 4 und eines daraus gebildeten Schichtaufbaus 13, die vorzugsweise mit einem Förderantrieb und/oder einem ein- oder mehrteiligen Förderelement umfassend beispielsweise eine oder mehrere Transportrollen, Transportbänder oder dergleichen versehen ist. Einzelne oder alle Verarbeitungseinheiten können über eine Steuereinrichtung S angesteuert werden. Die einzelnen Verarbeitungseinheiten werden nun im Weiteren im Zuge der Beschreibung des Verfahrens zur Herstellung von Vorformlingen 3 für Flugzeugstrukturbauteile 2 näher beschrieben.

Die Bereitstellungseinheit 6 der Vorrichtung ist eingerichtet, einen ein- oder mehrlagigen Schichtaufbau 13 mit mindestens einer Materiallage 4, hier zwei Materiallagen 4, eines thermisch aktivierbaren, flexiblen Faserverbundwerkstoffs, wie er zuvor beschrieben wurde, zusammen mit einer an mindestens einer Außenseite des Schichtaufbaus 13 jeweils angeordneten Schutzfolie 14 bereitzustellen. Hier und vorzugsweise werden die Materiallagen 4 und somit der Schichtaufbau 13 kontinuierlich bereitgestellt. Dazu wird die Bereitstellungseinheit 6 mit mindestens einer Rolle 5, hier zwei Rollen 5, umfassend je eine aufgespulte Materiallage 4 bestückt. Grundsätzlich sind aber auch andere Arten der Anlieferung einer Materiallage 4 und der Bestückung der Bereitstellungseinheit 6 mit der Materiallage 4 denkbar.

Die Schutzfolie 14 ist eine Schutzfolie, die bereits beim Aufspulen der jeweiligen Materiallage 4 zum Bilden der Rolle 5 mit einer Außenseite der jeweiligen Materiallage 4 verbunden ist, um ein ungewolltes Verkleben benachbarter Materiallagen 4 oder radial benachbarter Materiallagenabschnitte bis zu dem Zeitpunkt zu verhindern, zu welchem die Bereitstellungseinheit 6 mit der oder den Materiallagen 4 bestückt wird. Es kann auch jede Außenseite der jeweiligen Materiallage 4 mit einer solchen Schutzfolie 14 bestückt sein. Die jeweilige Schutzfolie 14, von der hier nur eine vorgesehen ist, ist also bereits vor einem Umformen des Schichtaufbaus 13 mit der oder den Materiallagen 4 verbunden.

Die Schutzfolie 14 oder die Schutzfolien 14 weisen hier und vorzugsweise, und zwar zumindest an ihrer dem Kontakt mit dem Schichtaufbau 13 zugeordneten Seite, eine strukturierte Oberfläche auf.

Wie in der schematischen Ansicht in Fig. 2 oben dargestellt ist, werden hier mehrere Materiallagen 4, im Ausführungsbeispiel zwei Materiallagen 4, die jeweils an einer Außenseite mit einer Schutzfolie 14 versehen sind, in der Bereitstellungseinheit 6 zusammengeführt und bilden dann zusammen den Schichtaufbau 13, der dann der weiteren Verarbeitung, insbesondere in der Umformeinheit 7a, in Förderrichtung F zugeführt wird. In einer alternativen, hier nicht dargestellten Ausführungsform, kann der Schichtaufbau 13 auch nur aus einer einzelnen Materiallage 4 gebildet sein, also als einlagiger Schichtaufbau 13 ausgestaltet sein. Die weiteren Ausführungen zu dem hier und vorzugsweise mehrlagigen Schichtaufbau 13 gelten gleichermaßen auch für einen einlagigen Schichtaufbau 13.

In der Vorrichtung ist der Bereitstellungseinheit 6 in Förderrichtung F mindesteins eine Umformeinheit 7a nachgelagert, bei der es sich um eine Querumformeinheit handelt, mit der der Schichtaufbau 13 in ein vorbestimmtes Querschnittsprofil umgeformt wird. Der Umformvorgang ist durch eine Zusammenschau der Schnitte A-A, B-B und C-C in Fig. 2 veranschaulicht. Zusätzlich kann auch eine Längsumformeinheit vorgesehen sein, durch die der Schichtaufbau 13 um eine zur Förderrichtung F orthogonal gerichtete Achse umgeformt werden kann, beispielsweise zur Erzeugung einer vorbestimmten Längskrümmung. Eine solche Längsumformeinheit ist hier schematisch als eine weitere, optionale Umformeinheit 7b dargestellt und hier und vorzugsweise der als Querumformeinheit ausgestalteten Umformeinheit 7a in Förderrichtung F nachgeschaltet. Die weiteren Ausführungen zu der hier als Querumformeinheit ausgestalteten Umformeinheit 7a gelten gleichermaßen für andere Umformeinheiten und insbesondere auch für die hier optionale, als Längsumformeinheit ausgestaltete weitere Umformeinheit 7b.

Wesentlich ist nun, dass der Schichtaufbau 13 zusammen mit der jeweiligen Schutzfolie 14 der Umformeinheit 7a oder einer der Umformeinheiten 7a, 7b mit einem Querschnittsprofil, in dem sich die Schutzfolie 14 oder mindestens eine der Schutzfolien 14 entlang einer Geraden G erstreckt, zuführbar ist. Diese Umformeinheit 7a, der der Schichtaufbau 13 mit besagtem Querschnittsprofil zuführbar ist, ist wie gesagt eine Querumformeinheit. Insbesondere handelt es sich bei dieser Umformeinheit um die in Förderrichtung F erste Umformeinheit. Da der Schichtaufbau 13 hier und vorzugsweise an beiden seiner Außenseiten mit je einer Schutzfolie 14 versehen ist, ist es hier und vorzugsweise so, dass das Querschnittsprofil des Schichtaufbaus 13 so geformt ist, dass sich beide Schutzfolien 14 jeweils entlang einer Geraden G erstrecken, wie der Schnitt A-A in Fig. 2 zeigt.

Hier und vorzugsweise ist es, wie ebenfalls der Schnitt A-A in Fig. 2 zeigt, sogar so, dass der Schichtaufbau 13 zusammen mit der jeweiligen Schutzfolie 14 der Umformeinheit 7a entlang einer Ebene E zuführbar ist, die sich insbesondere in Förderrichtung F erstreckt, vorzugsweise derart, dass sich die Schutzfolie 14 oder Schutzfolien 14, die sich bis zum Erreichen der jeweiligen Umformeinheit 7a entlang der Geraden G erstreckt bzw. erstrecken, entlang der Ebene E erstreckt bzw. erstrecken. Die besondere Ausrichtung des Schichtaufbaus 13 unmittelbar bevor dieser einer ersten Querumformung ausgesetzt wird, also die Ausrichtung, bei der sich die Schutzfolie im Querschnitt entlang einer Geraden und insbesondere sich die Schutzfolie entlang einer Ebene erstreckt, wird hier und vorzugsweise durch eine besondere Ausgestaltung der Zuführeinheit 12a erreicht. Die Zuführeinheit 12 weist neben einem Förderantrieb ein ein- oder mehrteiliges Transportelement, insbesondere in Form einer oder mehrerer Transportrollen, Transportbänder oder dergleichen, auf, wobei die Anordnung der einzelnen Teile oder Abschnitte des Transportelements, insbesondere die Anordnung der Transportrollen, Transportbänder oder dergleichen, und deren Ausrichtung zueinander so gewählt ist, dass vor der Umformeinheit 7a die jeweilige Schutzfolie 14 und insbesondere der Schichtaufbau 13 gegenüber dem Anlieferungszustand noch nicht querumgeformt und insbesondere überhaupt noch nicht umgeformt ist. Der Anlieferungszustand ist der Zustand von Materiallage 4 und Schutzfolie 14 zu dem Zeitpunkt, zu dem die Bereitstellungseinheit 6 damit bestückt wird.

Hier und vorzugsweise ist die Zuführeinheit 12 und sind insbesondere die einzelnen Teile oder Abschnitte des Transportelements, beispielsweise die Transportrollen und/oder die Transportbänder, eingerichtet, den Schichtaufbau 13 zusammen mit der jeweiligen Schutzfolie 14 von der Bereitstellungseinheit 6 zu der jeweiligen Umformeinheit, hier der ersten Umformeinheit 7a, mit einem Querschnittsprofil, in dem sich die Schutzfolie 14 oder mindestens eine der Schutzfolien 14, hier beide Schutzfolien 14, entlang einer Geraden G erstreckt bzw. erstrecken, zu transportieren. Besonders bevorzugt ist es so, dass die Zuführeinheit 12 und insbesondere die Teile oder Abschnitte des Transportelements eingerichtet ist bzw. sind, den Schichtaufbau 13 zusammen mit der jeweiligen Schutzfolie 14 entlang einer Ebene E von der Bereitstellungseinheit 6 zu der jeweiligen Umformeinheit, hier der ersten Umformeinheit 7a, zu transportieren, vorzugsweise derart, dass sich die Schutzfolie 14 oder Schutzfolien 14, die sich bis zum Erreichen der jeweiligen Umformeinheit 7a entlang der Geraden G erstreckt bzw. erstrecken, entlang der Ebene E erstreckt bzw. erstrecken.

Wie zuvor bereits angedeutet wurde, weist die Vorrichtung hier und vorzugsweise eine Heizeinheit 8 auf. Diese Heizeinheit 8 ist hier und vorzugsweise der jeweiligen Umformeinheit 7a, insbesondere beiden Umformeinheiten 7a, 7b, vorgelagert und eingerichtet, den Schichtaufbau 13 zusammen mit der jeweiligen Schutzfolie 14 während des insbesondere kontinuierlichen Hindurchführens durch die Heizeinheit 8 zu erwärmen. Vorzugsweise wird der Schichtaufbau, über einen Teil seines Querschnitts oder über seinen vollständigen Querschnitt, auf eine Temperatur in einem Bereich von 100 bis 160 °C, weiter vorzugsweise auf eine Temperatur in einem Bereich von 110 bis 150 °C, weiter vorzugsweise auf eine Temperatur in einem Bereich von 120 bis 150 °C, gebracht. Die jeweilige Schutzfolie 14 bleibt dabei weiter so wie zuvor beschrieben ausgerichtet, das heißt im Querschnitt entlang einer Geraden G bzw. entlang einer Ebene E.

Der Schichtaufbau 13 wird hier wie erläutert vorzugsweise als mehrlagiger Schichtaufbau 13 mit mindestens zwei, hier genau zwei, oder auch mehr Materiallagen 4 eines thermisch aktivierbaren, flexiblen Faserverbundwerkstoffs zusammen mit einer an mindestens einer Außenseite des Schichtaufbaus 13 jeweils angeordneten Schutzfolie 14 insbesondere kontinuierlich bereitgestellt. Hierbei ist es so, dass sich die Materiallagen 4 unmittelbar berühren, also keine Schutzfolie zwischen jeweils benachbarten Materiallagen 4 vorgesehen ist. Eine Schutzfolie 14 ist wie gesagt ausschließlich an mindestens einer der Außenseiten, hier beiden Außenseiten, des Schichtaufbaus 13 vorgesehen.

Wie ebenfalls bereits erläutert wurde, weist die Vorrichtung hier eine Trenneinheit 9 und/oder eine Nachhärteeinheit 10 auf. Die Trenneinheit 9 ist hier und vorzugsweise der jeweiligen Umformeinheit 7a, insbesondere allen Umformeinheiten 7a, 7b, in Förderrichtung F nachgelagert und eingerichtet, den umgeformten Schichtaufbau 13, wie dieser im Schnitt C-C in Fig.2 dargestellt ist, quer zur Förderrichtung F zu durchtrennen und dadurch die Vorformlinge 3 mit einer vorgegebenen Länge zu bilden. Die Nachhärteeinheit 10 ist hier und vorzugsweise der jeweiligen Umformeinheit 7a, insbesondere allen Umformeinheiten 7a, 7b, insbesondere auch der Trenneinheit 9, in Förderrichtung F nachgelagert. Die Nachhärteeinheit 10, die insbesondere als Autoklav ausgestaltet ist, ist eingerichtet, den umgeformten und insbesondere durchtrennten Schichtaufbau 13 und somit die Vorformlinge 3 zu erwärmen und dadurch nachzuhärten. Der Schichtaufbau 13 bzw. der jeweilige Vorformling 3 wird dabei über einen Teil seines Querschnitts oder über seinen vollständigen Querschnitt vorzugsweise auf eine Temperatur in einem Bereich von 160 bis 220 °C, weiter vorzugsweise auf eine Temperatur in einem Bereich von 170 bis 210 °C, weiter vorzugsweise auf eine Temperatur in einem Bereich von 170 bis 200 °C, erwärmt.

Weiter ist, wie ebenfalls bereits erläutert wurde, eine Abzieheinheit 11 vorgesehen. Diese Abzieheinheit 11 ist eingerichtet, die Schutzfolie 14 oder Schutzfolien 14, die sich bis zum Erreichen der jeweiligen Umformeinheit 7a noch entlang der jeweiligen Geraden G erstreckt hat bzw. haben, vorzugsweise alle Schutzfolien 14, von dem Schichtaufbau 13 abzuziehen. Eine solche Abzieheinheit 11 kann grundsätzlich in auf die Förderrichtung F bezogen unterschiedlichen Abschnitten der Vorrichtung angeordnet sein. Die Abzieheinheit 11 ist insbesondere eingerichtet, die jeweilige Schutzfolie 14 in einem Abschnitt der Vorrichtung abzuziehen, der wie bei dem in Fig. 2 oben dargestellten Ausführungsbeispiel in Förderrichtung F zwischen der Trenneinheit 9 und der Nachhärteeinheit 10 liegt. Der entsprechende Abschnitt der Vorrichtung für das Abziehen der jeweiligen Schutzfolie 14 kann aber auch in Förderrichtung F zwischen der jeweiligen Umformeinheit 7a oder einer der Umformeinheiten 7a, 7b, insbesondere der in Förderrichtung F letzten Umformeinheit 7b, und der Trenneinheit 9 liegen. Zusätzlich oder alternativ kann auch vorgesehen sein, dass der besagte Abschnitt zwischen der jeweiligen Umformeinheit 7a oder einer der Umformeinheiten 7a, 7b, insbesondere der in Förderrichtung F letzten Umformeinheit 7b, und der Nachhärteeinheit 10 liegt. Auch ist es denkbar, dass der besagte Abschnitt der Nachhärteeinheit 10 in Förderrichtung F nachgelagert ist.

Nach einer weiteren Lehre, der eigenständige Bedeutung zukommt, wird ein Verfahren zum Herstellen von Vorformlingen 3 für Flugzeugstrukturbauteile 2, insbesondere zur Anwendung in einer vorschlagsgemäßen Vorrichtung, beansprucht. Bei dem Verfahren wird in einer Bereitstellungseinheit 6 ein Schichtaufbau 13 mit mindestens einer Materiallage 4 eines thermisch aktivierbaren, flexiblen Faserverbundwerkstoffs zusammen mit einer an mindestens einer Außenseite des Schichtaufbaus 13 jeweils angeordneten Schutzfolie 14 insbesondere kontinuierlich bereitgestellt. Ferner wird bei dem Verfahren in mindestens einer der Bereitstellungseinheit 6 in Förderrichtung F nachgelagerten Umformeinheit 7a, 7b der bereitgestellte Schichtaufbau 13 umgeformt. Das vorschlagsgemäße Verfahren zeichnet sich dadurch aus, dass der Schichtaufbau 13 zusammen mit der jeweiligen Schutzfolie 14 der Umformeinheit 7a oder einer der Umformeinheiten 7a, 7b mit einem Querschnittsprofil, in dem sich die Schutzfolie 14 oder mindestens eine der Schutzfolien 14 entlang einer Geraden G erstreckt, zugeführt wird. Auf alle Ausführungen zu der vorschlagsgemäßen Vorrichtung darf verwiesen werden.

Besonders bevorzugt ist es dabei so, dass die mindestens eine Materiallage 4, hier die beiden Materiallagen 4, zusammen mit zumindest einer auf mindestens einer Außenseite der jeweiligen Materiallage 4 angeordneten Schutzfolie 14 angeliefert und die Bereitstellungseinheit 6 in dieser Form bestückt wird. Insbesondere ist dann die jeweilige Materiallage 4 zusammen mit der jeweiligen Schutzfolie 14 oder den beiden Schutzfolien 14 im zu einer Rolle aufgespulten Zustand, wobei die Bereitstellungseinheit 6 in dieser Form auch bestückt wird.

Nach einer weiteren Lehre, der ebenfalls eigenständige Bedeutung zukommt, wird ein Vorformling 3 beansprucht, der unter Verwendung einer vorschlagsgemäßen Vorrichtung und/oder durch ein vorschlagsgemäßes Verfahren hergestellt ist. Auf alle Ausführungen zu der vorschlagsgemäßen Vorrichtung und zu dem vorschlagsgemäßen Verfahren darf verwiesen werden.

## Patentansprüche

1. Vorrichtung zum Herstellen von Vorformlingen (3) für Flugzeugstrukturbauteile (2),
wobei die Vorrichtung eine Bereitstellungseinheit (6) aufweist, die eingerichtet ist, einen Schichtaufbau (13) mit mindestens einer Materiallage (4) eines thermisch aktivierbaren, flexiblen Faserverbundwerkstoffs zusammen mit einer an mindestens einer Außenseite des Schichtaufbaus (13) jeweils angeordneten Schutzfolie (14) bereitzustellen,
wobei die Vorrichtung mindestens eine der Bereitstellungseinheit (6) in einer Förderrichtung (F) nachgelagerte Umformeinheit (7a, 7b) aufweist, die eingerichtet ist, den bereitgestellten Schichtaufbau (13) umzuformen,
**dadurch gekennzeichnet,**
**dass** der Schichtaufbau (13) zusammen mit der jeweiligen Schutzfolie (14) der Umformeinheit (7a) oder einer der Umformeinheiten (7a, 7b) mit einem Querschnittsprofil, mit dem sich die Schutzfolie (14) oder mindestens eine der Schutzfolien (14) entlang einer Geraden (G) erstreckt, zuführbar ist und dass die Vorrichtung eine Abzieheinheit (11) aufweist, die eingerichtet ist, die Schutzfolie (14) oder Schutzfolien (14), die sich bis zum Erreichen der jeweiligen Umformeinheit (7a) noch entlang der jeweiligen Geraden (G) erstreckt hat beziehungswiese haben, von dem Schichtaufbau (13) abzuziehen und wobei die Abzieheinheit der jeweiligen Umformeinheit in Förderrichtung nachgelagert ist.

2. Vorrichtung nach Anspruch 1, **dadurch gekennzeichnet, dass** der Schichtaufbau (13) zusammen mit der jeweiligen Schutzfolie (14) der jeweiligen Umformeinheit (7a) entlang einer Ebene (E) zuführbar ist, die sich insbesondere in Förderrichtung (F) erstreckt, vorzugsweise derart, dass sich die Schutzfolie (14) oder Schutzfolien (14), die sich bis zum Erreichen der jeweiligen Umformeinheit (7a) entlang der Geraden (G) erstreckt/erstrecken, entlang der Ebene (E) erstreckt/erstrecken.

3. Vorrichtung nach Anspruch 1 oder 2, **dadurch gekennzeichnet, dass** die Vorrichtung eine Zuführeinheit (12), insbesondere mit einem Förderantrieb und/oder einem ein- oder mehrteiligen Förderelement, aufweist, die eingerichtet ist, den Schichtaufbau (13) zusammen mit der jeweiligen Schutzfolie (14) von der Bereitstellungseinheit (6) zu der jeweiligen Umformeinheit (7a) mit einem Querschnittsprofil, mit dem sich die Schutzfolie (14) oder mindestens eine der Schutzfolien (14) entlang einer Geraden (G) erstreckt, zu transportieren.

4. Vorrichtung nach Anspruch 3, **dadurch gekennzeichnet, dass** die Zuführeinheit (12) eingerichtet ist, den Schichtaufbau (13) zusammen mit der jeweiligen Schutzfolie (14) entlang einer Ebene (E) von der Bereitstellungseinheit (6) zu der jeweiligen Umformeinheit (7a) zu transportieren, vorzugsweise derart, dass sich die Schutzfolie (14) oder Schutzfolien (14), die sich bis zum Erreichen der jeweiligen Umformeinheit (7a) entlang der Geraden (G) erstreckt/erstrecken, entlang der Ebene (E) erstreckt/erstrecken.

5. Vorrichtung nach einem der vorhergehenden Ansprüche, **dadurch gekennzeichnet, dass** die Vorrichtung eine der jeweiligen Umformeinheit (7a) in Förderrichtung (F) vorgelagerte Heizeinheit (8) aufweist, die eingerichtet ist, den Schichtaufbau (13) zusammen mit der jeweiligen Schutzfolie (14) während des Hindurchführens durch die Heizeinheit (8) zu erwärmen, vorzugsweise auf eine Temperatur in einem Bereich von 100 bis 160 °C, weiter vorzugsweise auf eine Temperatur in einem Bereich von 110 bis 150 °C, weiter vorzugsweise auf eine Temperatur in einem Bereich von 120 bis 150 °C.

6. Vorrichtung nach einem der vorhergehenden Ansprüche, **dadurch gekennzeichnet, dass** die Bereitstellungseinheit (6) eingerichtet ist, den Schichtaufbau (13) als mehrlagigen Schichtaufbau (13) mit mindestens zwei oder mehr Materiallagen (4) eines thermisch aktivierbaren, flexiblen Faserverbundwerkstoffs zusammen mit einer an mindestens einer Außenseite des Schichtaufbaus (13) jeweils angeordneten Schutzfolie (14) bereitzustellen, wobei sich die Materiallagen (4) vorzugsweise unmittelbar berühren.

7. Vorrichtung nach einem der vorhergehenden Ansprüche, **dadurch gekennzeichnet, dass** die Vorrichtung eine der jeweiligen Umformeinheit (7a) in Förderrichtung (F) nachgelagerte Trenneinheit (9) aufweist, die eingerichtet ist, den umgeformten Schichtaufbau (13) quer zur Förderrichtung (F) zu durchtrennen und dadurch Vorformlinge (3) mit einer vorgegebenen Länge zu bilden.

8. Vorrichtung nach einem der vorhergehenden Ansprüche, **dadurch gekennzeichnet, dass** die Vorrichtung eine der jeweiligen Umformeinheit (7a), insbesondere auch der Trenneinheit (9), in Förderrichtung (F) nachgelagerte Nachhärteeinheit (10), insbesondere in Form eines Autoklaven, aufweist, die eingerichtet ist, den umgeformten und insbesondere durchtrennten Schichtaufbau (13) zu erwärmen, vorzugsweise auf eine Temperatur in einem Bereich von 160 bis 220 °C, weiter vorzugsweise auf eine Temperatur in einem Bereich von 170 bis 210 °C, weiter vorzugsweise auf eine Temperatur in einem Bereich von 170 bis 200 °C.

9. Vorrichtung nach einem der vorhergehenden Ansprüche, **dadurch gekennzeichnet, dass** die Vorrichtung eine Abzieheinheit (11) aufweist, die eingerichtet ist, alle Schutzfolien (14), die sich bis zum Erreichen der jeweiligen Umformeinheit (7a) noch entlang der jeweiligen Geraden (G) erstreckt hat/haben von dem Schichtaufbau (13) abzuziehen.

10. Vorrichtung nach Anspruch 9, **dadurch gekennzeichnet, dass** die Abzieheinheit (11) eingerichtet ist, die Schutzfolie (14) oder Schutzfolien (14), die sich bis zum Erreichen der jeweiligen Umformeinheit (7a) noch entlang der jeweiligen Geraden (G) erstreckt hat/haben, vorzugsweise alle Schutzfolien (14), in einem Abschnitt der Vorrichtung abzuziehen, der in Förderrichtung (F) zwischen der jeweiligen Umformeinheit (7a) oder einer der Umformeinheiten (7a, 7b) und der Trenneinheit (9) liegt und/oder der in Förderrichtung (F) zwischen der jeweiligen Umformeinheit (7a) oder einer der Umformeinheiten (7a, 7b) und der Nachhärteeinheit (10) liegt und/oder der in Förderrichtung (F) zwischen der Trenneinheit (9) und der Nachhärteeinheit (10) liegt oder der der Nachhärteeinheit (10) in Förderrichtung (F) nachgelagert ist.

11. Verfahren zur Herstellung von Vorformlingen (3) für Flugzeugstrukturbauteile (2), insbesondere zur Anwendung in einer Vorrichtung nach einem der vorhergehenden Ansprüche,
bei dem in einer Bereitstellungseinheit (6) ein Schichtaufbau (13) mit mindestens einer Materiallage (4) eines thermisch aktivierbaren, flexiblen Faserverbundwerkstoffs zusammen mit einer an mindestens einer Außenseite des Schichtaufbaus (13) jeweils angeordneten Schutzfolie (14) bereitgestellt wird und
bei dem in mindestens einer der Bereitstellungseinheit (6) in einer Förderrichtung (F) nachgelagerten Umformeinheit (7a) der bereitgestellte Schichtaufbau (13) umgeformt wird,
**dadurch gekennzeichnet,**
**dass** der Schichtaufbau (13) zusammen mit der jeweiligen Schutzfolie (14) der Umformeinheit (7a) oder einer der Umformeinheiten (7a, 7b) mit einem Querschnittsprofil, mit dem sich die Schutzfolie (14) oder mindestens eine der Schutzfolien (14) entlang einer Geraden (G) erstreckt, zugeführt und umgeformt wird.

12. Verfahren nach Anspruch 11, **dadurch gekennzeichnet, dass** der Faserverbundwerkstoff der mindestens einen Materiallage (4) ein Fasermaterial aufweist, das mit einem Reaktionsharz imprägniert ist, vorzugsweise, dass das Fasermaterial Trockenfasern, Rovings, ein Fasergewebe, ein Fasergelege, ein Faservlies und/oder ein Fasergeflecht aufweist und/oder das Reaktionsharz ein Harz auf Epoxidharzbasis ist.

13. Verfahren nach Anspruch 11 oder 12, **dadurch gekennzeichnet, dass** die Schutzfolie (14) oder Schutzfolien (14), die sich bis zum Erreichen der jeweiligen Umformeinheit (7a) noch entlang der jeweiligen Geraden (G) erstreckt hat/haben, vorzugsweise alle Schutzfolien (14), an ihrer dem Kontakt mit dem Schichtaufbau (13) zugeordneten Seite eine strukturierte Oberfläche aufweist/aufweisen.

14. Verfahren nach einem der Ansprüche 11 bis 13, **dadurch gekennzeichnet, dass** der Schichtaufbau (13) bis zum Erreichen der jeweiligen Umformeinheit (7a) auf einer oder beiden Außenseiten mit einer Schutzfolie (14) versehen ist, vorzugsweise, dass sich die auf beiden Außenseiten vorgesehenen Schutzfolien (14) bis zum Erreichen der jeweiligen Umformeinheit (7a) entlang der Geraden (G) und insbesondere entlang einer Ebene (E), die sich insbesondere in Förderrichtung (F) erstreckt, erstrecken.

15. Vorformling hergestellt durch ein Verfahren nach einem der Ansprüche 11 bis 14.

## Claims

1. Device for producing preforms (3) for aircraft structural components (2),
wherein the device has a supply unit (6), which is designed to supply a layered structure (13) having at least one material ply (4) of a thermally activatable, flexible fibre composite material, together with a protective film (14) respectively arranged on at least one outer side of the layered structure (13),
wherein the device has at least one shaping unit (7a, 7b), which is arranged downstream of the supply unit (6) in a conveying direction (F) and is designed to shape the layered structure (13) supplied,
**characterized**
**in that** the layered structure (13), together with the respective protective film (14), can be fed to the shaping unit (7a) or to one of the shaping units (7a, 7b) with a cross-sectional profile with which the protective film (14) or at least one of the protective films (14) extends along a straight line (G), and in that the device has a pull-off unit (11), which is designed to pull the protective film (14) or protective films (14), which had extended along the respective straight line (G) until it/they reached the respective shaping unit (7a), off of the layered structure (13) and wherein the pull-off unit is arranged downstream of the respective shaping unit in the conveying direction.

2. Device according to Claim 1, **characterized in that** the layered structure (13), together with the respective protective film (14), can be fed to the respective shaping unit (7a) along a plane (E) which extends in particular in the conveying direction (F), preferably in such a way that the protective film (14) or protective films (14), which had extended along the straight line (G) until it/they reached the shaping unit (7a), extends/extend along the plane (E).

3. Device according to Claim 1 or 2, **characterized in that** the device has a feed unit (12), which in particular has a conveying drive and/or a one-part or multi-part conveying element and is designed to transport the layered structure (13), together with the respective protective film (14), from the supply unit (6) to the respective shaping unit (7a) with a cross-sectional profile with which the protective film (14) or at least one of the protective films (14) extends along a straight line (G).

4. Device according to Claim 3, **characterized in that** the feed unit (12) is designed to transport the layered structure (13), together with the respective protective film (14), along a plane (E) from the supply unit (6) to the respective shaping unit (7a), preferably in such a way that the protective film (14) or protective films (14), which had extended along the straight line (G) until it/they reached the respective shaping unit (7a), extends/extend along the plane (E).

5. Device according to one of the preceding claims, **characterized in that** the device has a heating unit (8), which is arranged upstream of the respective shaping unit (7a) in the conveying direction (F) and is designed to heat the layered structure (13), together with the respective protective film (14), as it passes through the heating unit (8), preferably to a temperature in a range from 100 to 160°C, more preferably to a temperature in a range from 110 to 150°C, more preferably to a temperature in a range from 120 to 150°C.

6. Device according to one of the preceding claims, **characterized in that** the supply unit (6) is designed to supply the layered structure (13) as a multi-ply layered structure (13) having at least two or more material plies (4) of a thermally activatable, flexible fibre composite material, together with a protective film (14) respectively arranged on at least one outer side of the layered structure (13), wherein the material plies (4) are preferably in direct contact with one another.

7. Device according to one of the preceding claims, **characterized in that** the device has a separating unit (9), which is arranged downstream of the respective shaping unit (7a) in the conveying direction (F) and is designed to sever the shaped layered structure (13) transversely to the conveying direction (F) and thereby form preforms (3) of a predetermined length.

8. Device according to one of the preceding claims, **characterized in that** the device has a post-curing unit (10), in particular in the form of an autoclave, which is arranged downstream of the respective shaping unit (7a), in particular also of the separating unit (9), in the conveying direction (F) and is designed to heat the shaped and in particular severed layered structure (13), preferably to a temperature in a range from 160 to 220°C, more preferably to a temperature in a range from 170 to 210°C, more preferably to a temperature in a range from 170 to 200°C.

9. Device according to one of the preceding claims, **characterized in that** the device has a pull-off unit (11), which is designed to pull all the protective films (14), which had extended along the respective straight line (G) until it/they reached the respective shaping unit (7a), off of the layered structure (13).

10. Device according to Claim 9, **characterized in that** the pull-off unit (11) is designed to pull off the protective film (14) or protective films (14) which had extended along the respective straight line (G) until it/they reached the respective shaping unit (7a), preferably all the protective films (14), in a portion of the device which lies between the respective shaping unit (7a) or one of the shaping units (7a, 7b) and the separating unit (9) in the conveying direction (F) and/or which lies between the respective shaping unit (7a) or one of the shaping units (7a, 7b) and the post-curing unit (10) in the conveying direction (F) and/or which lies between the separating unit (9) and the post-curing unit (10) in the conveying direction (F) or which is arranged downstream of the post-curing unit (10) in the conveying direction (F).

11. Method for producing preforms (3) for aircraft structural components (2), in particular for use in a device according to one of the preceding claims,
in which a layered structure (13) having at least one material ply (4) of a thermally activatable, flexible fibre composite material, together with a protective film (14) respectively arranged on at least one outer side of the layered structure (13), is supplied in a supply unit (6) and
in which the layered structure (13) supplied is shaped in at least one shaping unit (7a) arranged downstream of the supply unit (6) in a conveying direction (F),
**characterized**
**in that** the layered structure (13), together with the respective protective film (14), is fed to the shaping unit (7a) or to one of the shaping units (7a, 7b) with a cross-sectional profile with which the protective film (14) or at least one of the protective films (14) extends along a straight line (G), and shaped.

12. Method according to Claim 11, **characterized in that** the fibre composite material of the at least one material ply (4) comprises a fibre material which is impregnated with a reactive resin, preferably **in that** the fibre material comprises dry fibres, rovings, a woven fibre fabric, a laid fiber scrim, a fibre nonwoven and/or a fibre braid and/or the reactive resin is an epoxy-based resin.

13. Method according to Claim 11 or 12, **characterized in that** the protective film (14) or protective films (14) which had extended along the respective straight line (G) until it/they reached the respective shaping unit (7a), preferably all the protective films (14), has/have a structured surface on its/their side that is assigned to making contact with the layered structure (13).

14. Method according to one of Claims 11 to 13, **characterized in that**, until it reaches the respective shaping unit (7a), the layered structure (13) is provided on one or both outer sides with a protective film (14), preferably **in that**, until the layered structure reaches the respective shaping unit (7a), the protective films (14) provided on both outer sides extend along the straight line (G) and in particular along a plane (E) which extends in particular in the conveying direction (F).

15. Preform produced by a method according to one of Claims 11 to 14.

## Revendications

1. Dispositif pour la fabrication de préformes (3) pour des composants structuraux d'aéronef (2),
le dispositif présentant une unité de fourniture (6) qui est adaptée pour fournir une structure stratifiée (13) avec au moins une couche de matériau (4) d'un matériau composite fibreux flexible activable thermiquement conjointement avec un film protecteur (14) agencé respectivement sur au moins un côté extérieur de la structure stratifiée (13),
le dispositif présentant au moins une unité de transformation (7a, 7b) agencée en aval de l'unité de fourniture (6) dans une direction de convoyage (F), qui est adaptée pour transformer la structure stratifiée (13) fournie,
**caractérisé**
**en ce que** la structure stratifiée (13) conjointement avec le film protecteur respectif (14) peut être amenée à l'unité de transformation (7a) ou à l'une des unités de transformation (7a, 7b) avec un profil de section transversale avec lequel le film protecteur (14) ou au moins l'un des films protecteurs (14) s'étend le long d'une ligne droite (G), et en ce que le dispositif présente une unité de retrait (11) qui est adaptée pour retirer de la structure stratifiée (13) le film protecteur (14) ou les films protecteurs (14) qui s'étendent encore le long de la ligne droite respective (G) jusqu'à atteindre l'unité de transformation respective (7a), et l'unité de retrait étant agencée en aval de l'unité de transformation respective dans la direction de convoyage.

2. Dispositif selon la revendication 1, **caractérisé en ce que** la structure stratifiée (13) peut être amenée conjointement avec le film protecteur respectif (14) à l'unité de transformation respective (7a) le long d'un plan (E) qui s'étend notamment dans la direction de convoyage (F), de préférence de telle sorte que le film protecteur (14) ou les films protecteurs (14) qui s'étendent le long de la ligne droite (G) jusqu'à atteindre l'unité de transformation respective (7a) s'étendent le long du plan (E).

3. Dispositif selon la revendication 1 ou 2, **caractérisé en ce que** le dispositif présente une unité d'amenée (12), notamment avec un entraînement de convoyage et/ou un élément de convoyage en une ou plusieurs parties, qui est adaptée pour transporter la structure stratifiée (13) conjointement avec le film protecteur respectif (14) de l'unité de fourniture (6) vers l'unité de transformation respective (7a) avec un profil de section transversale avec lequel le film protecteur (14) ou au moins l'un des films protecteurs (14) s'étend le long d'une ligne droite (G).

4. Dispositif selon la revendication 3, **caractérisé en ce que** l'unité d'amenée (12) est adaptée pour transporter la structure stratifiée (13) conjointement avec le film protecteur respectif (14) le long d'un plan (E) depuis l'unité de fourniture (6) vers l'unité de transformation respective (7a), de préférence de telle sorte que le film protecteur (14) ou les films protecteurs (14) qui s'étendent le long de la ligne droite (G) jusqu'à atteindre l'unité de transformation respective (7a) s'étendent le long du plan (E).

5. Dispositif selon l'une quelconque des revendications précédentes, **caractérisé en ce que** le dispositif présente une unité de chauffage (8) agencée en amont de l'unité de transformation respective (7a) dans la direction de convoyage (F), qui est adaptée pour chauffer la structure stratifiée (13) conjointement avec le film protecteur respectif (14) pendant le passage à travers l'unité de chauffage (8), de préférence à une température dans une plage de 100 à 160 °C, de manière davantage préférée à une température dans une plage de 110 à 150 °C, de manière davantage préférée à une température dans une plage de 120 à 150 °C.

6. Dispositif selon l'une quelconque des revendications précédentes, **caractérisé en ce que** l'unité de fourniture (6) est adaptée pour fournir la structure stratifiée (13) sous forme de structure stratifiée multicouche (13) avec au moins deux couches de matériau ou plus (4) d'un matériau composite fibreux flexible activable thermiquement, conjointement avec un film protecteur (14) agencé respectivement sur au moins un côté extérieur de la structure stratifiée (13), les couches de matériau (4) étant de préférence en contact direct les unes avec les autres.

7. Dispositif selon l'une quelconque des revendications précédentes, **caractérisé en ce que** le dispositif présente une unité de séparation (9) agencée en aval de l'unité de transformation respective (7a) dans la direction de convoyage (F), qui est adaptée pour sectionner la structure stratifiée transformée (13) transversalement à la direction de convoyage (F) et former ainsi des préformes (3) d'une longueur prédéfinie.

8. Dispositif selon l'une quelconque des revendications précédentes, **caractérisé en ce que** le dispositif présente une unité de post-durcissement (10) agencée en aval de l'unité de transformation respective (7a), notamment également de l'unité de séparation (9), dans la direction de convoyage (F), notamment sous la forme d'un autoclave, qui est adaptée pour chauffer la structure stratifiée (13) transformée et notamment sectionnée, de préférence à une température dans une plage de 160 à 220 °C, de préférence à une température dans une plage de 170 à 210 °C, de manière davantage préférée à une température dans une plage de 170 à 200 °C.

9. Dispositif selon l'une quelconque des revendications précédentes, **caractérisé en ce que** le dispositif présente une unité de retrait (11) qui est adaptée pour retirer de la structure stratifiée (13) tous les films protecteurs (14) qui s'étendent encore le long des lignes droites respectives (G) jusqu'à atteindre l'unité de transformation respective (7a).

10. Dispositif selon la revendication 9, **caractérisé en ce que** l'unité de retrait (11) est adaptée pour retirer le film protecteur (14) ou les films protecteurs (14) qui s'étendent encore le long de la ligne droite respective (G) jusqu'à atteindre l'unité de transformation respective (7a), de préférence tous les films protecteurs (14), dans une section du dispositif qui est située dans la direction de convoyage (F) entre l'unité de transformation respective (7a) ou l'une des unités de transformation (7a, 7b) et l'unité de séparation (9) et/ou qui est située dans la direction de convoyage (F) entre l'unité de transformation respective (7a) ou l'une des unités de transformation (7a, 7b) et l'unité de post-durcissement (10) et/ou qui est située dans la direction de convoyage (F) entre l'unité de séparation (9) et l'unité de post-durcissement (10) ou qui est agencée en aval de l'unité de post-durcissement (10) dans la direction de convoyage (F).

11. Procédé de fabrication de préformes (3) pour des composants structuraux d'aéronef (2), notamment pour utilisation dans un dispositif selon l'une quelconque des revendications précédentes,
dans lequel, dans une unité de fourniture (6), une structure stratifiée (13) avec au moins une couche de matériau (4) en un matériau composite fibreux flexible activable thermiquement est fournie conjointement avec un film protecteur (14) agencé respectivement sur au moins un côté extérieur de la structure stratifiée (13), et
dans lequel la structure stratifiée (13) fournie est transformée dans au moins une unité de transformation (7a) agencée en aval de l'unité de fourniture (6) dans une direction de convoyage (F),
**caractérisé**
**en ce que** la structure stratifiée (13) conjointement avec le film protecteur respectif (14) est amenée à l'unité de transformation (7a) ou à l'une des unités de transformation (7a, 7b) avec un profil de section transversale avec lequel le film protecteur (14) ou au moins l'un des films protecteurs (14) s'étend le long d'une ligne droite (G), et transformée.

12. Procédé selon la revendication 11, **caractérisé en ce que** le matériau composite fibreux de l'au moins une couche de matériau (4) présente un matériau fibreux imprégné d'une résine réactive, de préférence **en ce que** le matériau fibreux présente des fibres sèches, des mèches, un tissu fibreux, une nappe de fibres, un non-tissé de fibres et/ou un tressage de fibres et/ou la résine réactive est une résine à base de résine époxy.

13. Procédé selon la revendication 11 ou 12, **caractérisé en ce que** le film protecteur (14) ou les films protecteurs (14), qui s'étendent encore le long de la ligne droite respective (G) jusqu'à atteindre l'unité de transformation respective (7a), de préférence tous les films protecteurs (14), présentent une surface structurée sur leur côté associé au contact avec la structure stratifiée (13).

14. Procédé selon l'une quelconque des revendications 11 à 13, **caractérisé en ce que** la structure stratifiée (13) est pourvue d'un film protecteur (14) sur un ou les deux côtés extérieurs jusqu'à atteindre l'unité de transformation respective (7a), de préférence **en ce que** les films protecteurs (14) prévus sur les deux côtés extérieurs s'étendent le long de la ligne droite (G) et notamment le long d'un plan (E) qui s'étend notamment dans la direction de convoyage (F) jusqu'à atteindre l'unité de transformation respective (7a).

15. Préforme fabriquée par un procédé selon l'une quelconque des revendications 11 à 14.
